# EUROPEAN PATENT APPLICATION

(11) **EP 4 227 653 A1**
(43) Date of publication of application: **16.08.2023**
(21) Application number: 23154986.6
(22) Date of filing: 03.02.2023
(51) Int. Cl.: G01G 19/52, B23K 26/062

(54) **SYSTEM FOR AUTOMATIC BRINGING PRECIOUS METAL INGOTS TO A NOMINAL WEIGHT**

(30) Priority: 14.02.2022 IT 202200002621
(71) Applicant: DS4 S.r.l, 24066 Pedrengo, (BG) (IT)
(72) Inventor: PETROGALLI, Angelo, I-24066 Pedrengo, BERGAMO (IT)
(74) Representative: De Lorenzo, Danilo

(57) **Abstract**

A system for automatic bringing precious metal ingots to a nominal weight comprising: at least one positioning station (12, 13) for a plurality of ingots; at least one robotic system (17, 18) for handling said ingots; a weighing system (25) for said ingots; a laser (30) for processing said ingots inside at least one pressurized sealed chamber (35, 36); a suction system (40) connected to said at least one pressurized sealed chamber (35, 36).

## Description

The present invention relates to a system for automatic bringing precious metal ingots to a nominal weight.

Gold or silver ingots, or ingots made of precious metals such as platinum and palladium, are mainly manufactured to be sold to individuals and/or banks and/or sovereign states to ensure financial sustainability, economic sustainability or as savings or investment assets, since they are listed on all financial markets and regulated by market laws which are equal to those of shares.

In order for such ingots to be treated in an indisputable manner on the markets, they must comply with some very strict rules such as the quality of the metal defined by a purity which must be equal to or greater than 99.998%, and the weight which must be equal to and absolutely not lower than that declared (nominal) and indicated on the ingot itself.

Industrially, ingots are manufactured using two distinct production methods.

By casting, which involves weighing straw-colored gold grains and then pouring them into a mold to be melted in a furnace. Once cooled down, it is pressed by means of a press which will imprint the conventional wordings such as weight, manufacturer, fineness, an optional serial number, an optional customer name.

Once these operations have been completed, before packaging, it will be weighed, and then, by means of manual removal methods, with gauge and file, the weight thereof will be reduced to reach a weight close to that defined (nominal) and declared on the ingot (conventionally, 50,100,500,1000, 2000, 5000 grams).

The ingot will then be quality checked, and then packaged and sent to the customer.

The other method is by coining, which includes the continuous lamination of pats of material weighing tens of kg, leading, following multiple passes, to a calibrated thickness.

These laminated sheets are blanked to a known shape and with a weight similar to (and necessarily higher than) the nominal weight.

The ingots obtained by blanking will then feed the high-tonnage hydraulic presses which, by means of appropriate coining molds, will produce coined ingots carrying the above data.

Once these operations have been completed, before packaging, the ingot will be weighed, and then, by means of manual removal methods, with gauge and file, the weight thereof will be reduced to reach a weight close to (and necessarily higher than) the nominal weight indicated on the ingot.

The ingot will then be quality checked, and then packaged and sent to the customer.

To date, these processes just described require an adjustment of the weight which is carried out manually and by means of evaluation and continuous approximation processes, by reducing the excess weight by means of scraping tools which cut the finished ingots in positions that do not cause too much aesthetic damage.

Even though human action is of great professionalism and expertise, one does not get too close to the nominal weight since, if the ingot is underweight, it will be necessary to discard the ingot itself and then remelt the gold, which is a very expensive process.

It is the object of the present invention to provide a system for automatic bringing precious metal ingots to a nominal weight which overcomes the drawbacks of the prior art.

It is another object to provide a system which is precise.

It is a further object to provide a system which is deterministic.

In accordance with the present invention, these and further objects are achieved by a system for automatic bringing precious metal ingots to a nominal weight comprising: at least one positioning station for a plurality of ingots; at least one robotic system for handling said ingots; a weighing system for said ingots; a laser for processing said ingots inside at least one pressurized sealed chamber; a suction system connected to said at least one pressurized sealed chamber.

Such objects are also achieved by a method for automatic bringing precious metal ingots to a nominal weight comprising the steps of: positioning a plurality of ingots in at least one positioning station; weighing an ingot; removing part of said ingot by means of a laser in at least one pressurized sealed chamber; performing suction in said at least one pressurized sealed chamber.

Further features of the invention are described in the dependent claims.

There are several advantages of this solution as compared to the solutions of the prior art.

The Applicant has realized that, from the analysis of the ingot manufacturing process, the interest clearly emerges of adopting an advanced technology which can face this issue in a deterministic manner, which is certainly desirable in a market requiring quality and process stability.

Therefore, the system brings semi-finished blanked ingots, coined ingots and melted ingots to a nominal weight by means of a laser excavation technology of an aesthetic - and no longer just abrasive - type, thus a technology which is invasive but not perceptible by the end customer from an aesthetic point of view, through the creation of two- or three-dimensional graphic objects.

The system uses a laser as an excavation tool.

The excavation operation occurs inside a pressurized sealed chamber so that the excavated (sublimated) material can be collected by a suction system and confined inside an airtight container.

It is apparent that those skilled in the art understand that a pressurized sealed chamber can be a closed chamber having physical confinement walls, for example made of glass or plastic, and sealed so that gas or air cannot filter from the outside of the physical walls, or it can be an almost "virtually" sealed chamber, i.e., entirely or partially confined by flows of forced air or in depression, such as to generate a confinement region of the chamber within which it is possible to obtain a pressurization (or depressurization) for the collection of the excavated material by the suction system.

For example, in accordance with an embodiment, the pressurized sealed chamber is a container element, for example cylindrical in shape and with transparent walls.

For example, in accordance with another embodiment, the pressurized sealed chamber is the entire volume of the machine enclosed within the casing, described below, i.e., within the outermost protective walls of the entire machine which contain, for example, a robotic system, described below.

Furthermore, it is apparent that the term pressurized preferably means a chamber pressurized in depression, i.e., preferably at a pressure lower than atmospheric pressure, so that the excavated material is sucked towards a collection system, for example a filter, described below.

The system also includes a robotic system for handling the ingots, from the entrance to the various process stations, and then at the exit of the worked piece.

The system also includes at least one certified and self-calibrating scale which allows measuring the initial weight and the final weight, and therefore provide such indications to an advanced mathematical system which will transform this extra weight into one or more geometric patterns which will then be made by the laser.

The system also continues the complete definition thereof through the adoption of several vision systems which allow the overall control of the process.

The Applicant has also realized that the process used can be applied not only to coined ingots and melted ingots during the last processing step, but directly to the blanked precious metal pieces which are the semi-finished product before the coining step.

This is a great opportunity for the customer, since it allows coining without having to insert graphic appendices into the finished ingot, and therefore offers the huge advantage of obtaining ingots which are perfectly identical to those made with current techniques, but without having to pass through the material removal department to limit the weight of the ingots, and therefore without any type of aesthetic defect.

The features and advantages of the present invention will become apparent from the following detailed description of a practical embodiment thereof, shown by way of non-limiting example in the accompanying drawings, in which:

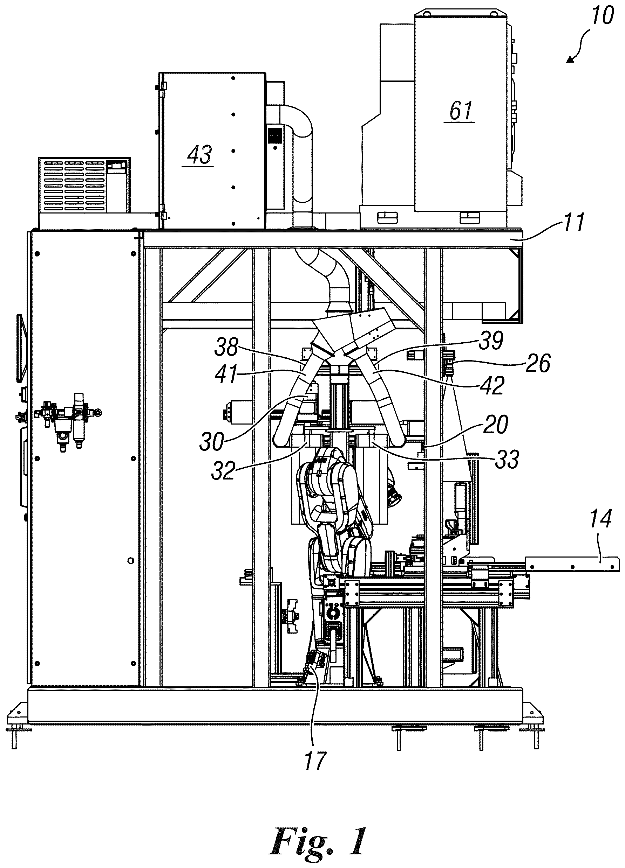

Figure 1 shows a side view of a system for automatic bringing precious metal ingots to a nominal weight, in accordance with the present invention;

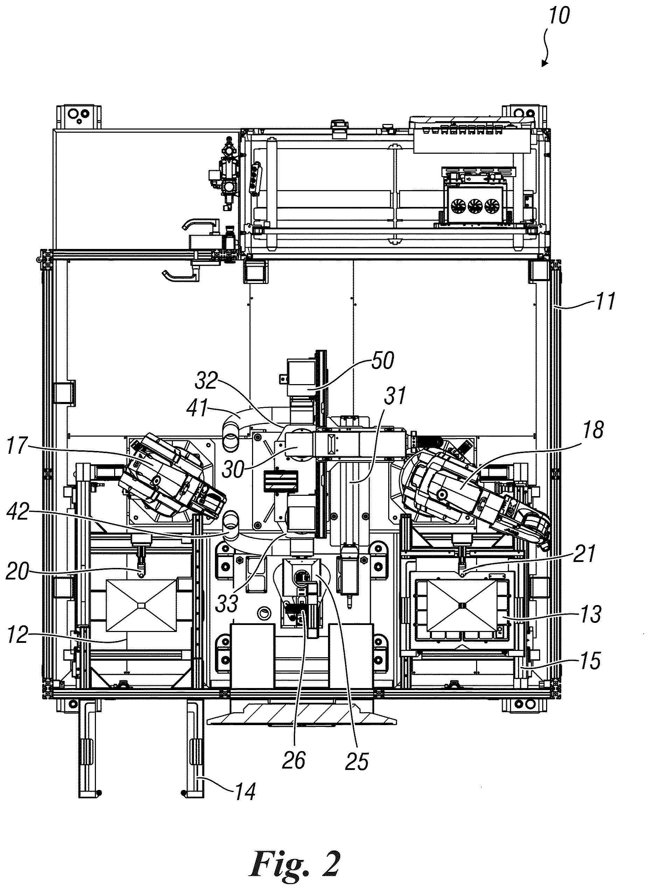

Figure 2 shows a top view of a system for automatic bringing precious metal ingots to a nominal weight, in accordance with the present invention;

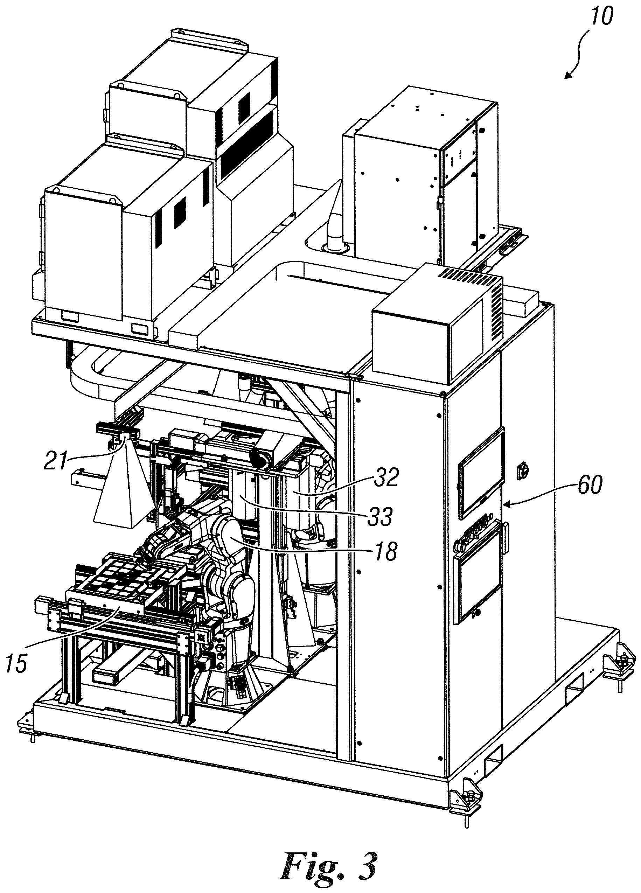

Figure 3 shows a perspective view of a system for automatic bringing precious metal ingots to a nominal weight, in accordance with the present invention;

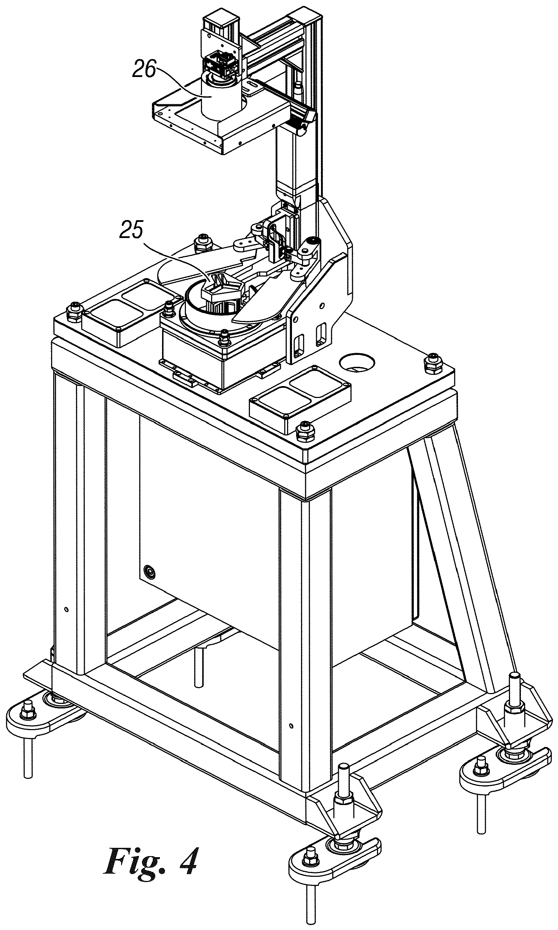

Figure 4 shows a weighing system of a system for automatic bringing precious metal ingots to a nominal weight, in accordance with the present invention;

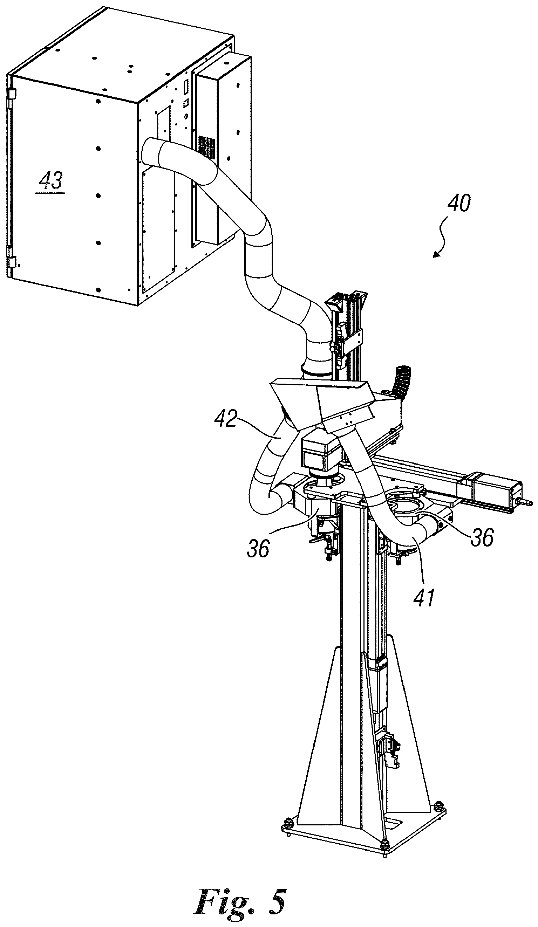

Figure 5 shows a suction system of a system for automatic bringing precious metal ingots to a nominal weight, in accordance with the present invention;

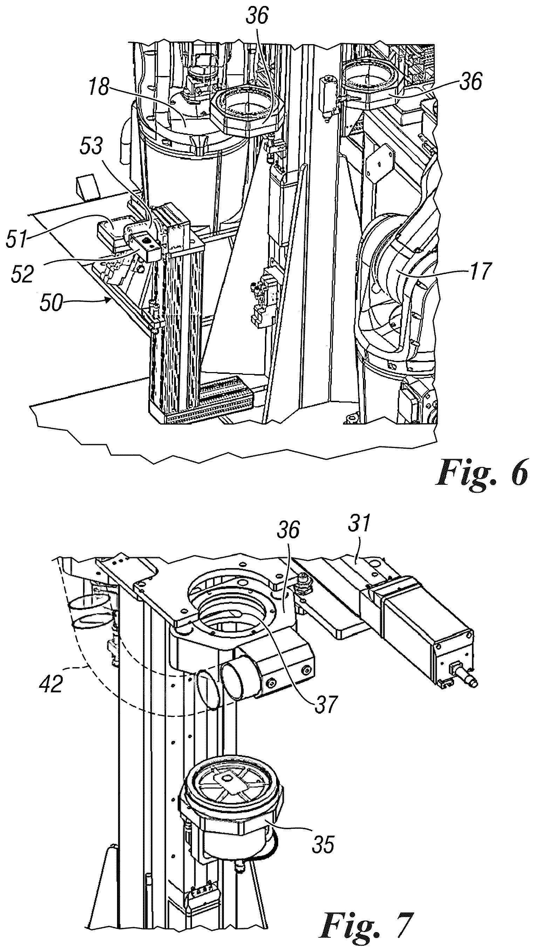

Figure 6 shows an ingot overturning system of a system for automatic bringing precious metal ingots to a nominal weight, in accordance with the present invention;
Figure 7 shows a vacuum sealing system of a system for automatic bringing precious metal ingots to a nominal weight, in accordance with the present invention;

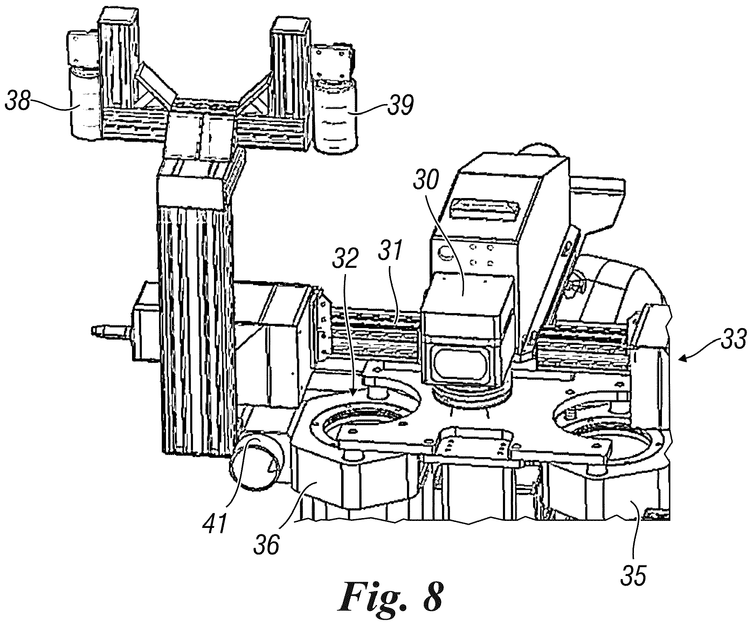

Figure 8 shows a vision system of a system for automatic bringing precious metal ingots to a nominal weight, in accordance with the present invention.

With reference to the accompanying figures, a system 10 for automatic bringing precious metal ingots to a nominal weight, in accordance with the present invention, comprises a mechanical structure 11 for supporting the system 10, formed of pillars and beams fixed to a lower base and contained by an upper base. The structure 11 is covered by a casing to protect the inner parts and protect the operators. All the elements forming the system 10 are placed on the structure 11.

In particular, the system 10 comprises a first bay 12 and, preferably, a second bay 13 for receiving the pallets of ingots which, with a respective trolley 14 and 15, carries the pallets of ingots inside or outside the structure 11 and positions it in a predefined area.

Each bay 12 and 13 is associated with a respective anthropomorphic arm 17 and 18, with six axes, comprising an adaptive pneumatic or mechanical gripper for gripping any ingot format. For operating the system, only one arm and one bay are sufficient, and the presence of two arms and two bays is to speed up the operations.

Each bay 12 and 13 is also associated with a respective neural adaptive vision system formed of a first video camera 20 and a second video camera 21, placed above the bays 12 and 13, to view the ingots in the two pallets and to check the two anthropomorphic arms 17 and 18.

The bays 12 and 13 and the respective associated elements are placed on the two sides of the structure 11, so that the first bay 12 is placed on the left and the second bay 13 is placed on the right.

In a central position with respect to the bays 12 and 13 there is a precision weighing system 25 associated with a neural vision system formed of a third video camera 26, placed above the weighing system 25. The weighing system 25 comprises a certified and self-calibrating scale (provided with an inner calibration mass, activatable by means of a computer command) with a resolution of 0.01 mg.

The third camera 26 checks the orientation of the ingot, checks the adequacy of the loaded ingot with respect to the production order coming from the centralized production system, and provides the central system with data and graphical information on the quality of the ingot.

Centrally with respect to the anthropomorphic arms 17 and 18, there is a laser 30 which can slide along a guide 31 to position itself in two operating stations 32 and 33.

The laser 30 is preferably an Ytterbium fiber Nd-Yag laser, with vertical output, complete with two axes interpolated by means of galvanometers, specific for the processing of precious metals.

The laser 30 preferably has an equivalent output power of 400W and preferably a wavelength of 1064 nm.

Each of the two operating stations 32 and 33 is formed of a lower base 35, for supporting the ingot, comprising a depression system for keeping the ingot in place; and an upper portion 36 for closing the lower base 35 to form a pressurized sealed chamber so that the excavated (sublimated) material can be collected by a suction system 40. The suction system 40 creates the required pressurization when the upper portion 36 is closed on the lower base 35.

The upper portion 36 has the upper surface formed of a glass 37, through which the laser 30 can operate inside the sealed chamber.

The operating stations 32 and 33 can be powered by both the anthropomorphic arm 17 and the anthropomorphic arm 18.

The two operating stations 32 and 33 comprise a respective fourth video camera 38 and fifth video camera 39, so as to provide the offset coordinates X and Y and the orientation of the ingot which will be placed to rest on the lower base 35, and the other operations in these stations.

The suction system 40 comprises two suction pipes 41 and 42 connected, on one side, to the pressurized sealed chambers formed of the lower bases 35 and the upper portion 36. On the other side, they are connected to a suction unit 43, placed above the structure 11, comprising an absolute filter of the HEPA type with a 0.3 micron filtration. The absolute filter will then be thermally destroyed, and from the recovered ashes thereof it will be possible to obtain a large percentage of gold which can then be reused.

Behind the laser 30 there is an ingot overturning system 50.

The ingot overturning system 50 comprises a station 51 where the ingot to be overturned is placed and a pneumatic or mechanical gripper 52 placed on a pivoting arm 53 which, by picking up the ingot from the station 51 and pivoting, offers the ingot to the anthropomorphic arm on the opposite face.

The system 10 comprises a system 60 for controlling all operations, preferably connected to an external supervision system, a cooling system 61 and other devices necessary for the operation of the system 10.

The control system 60 (preferably assisted by an external supervision system) allows carrying out the processing, putting the individual elements forming the system 10 online or offline, activating the programs relating to the nominal weighing, operating an artificial vision referred to the part, weighing the part, implementing the robot position program, obtaining the automatic sorting of the assignment codes on the subsystems, providing the production data to make any efficiency calculation, generating weight measurement report, and managing the reject/good data, configuring the sending of alert emails for warning and end-of-production events.

By picking up and depositing the ingots, the two anthropomorphic arms 17 and 18 allow moving them from the operating station associated therewith, from the weighing system 25, from both the operating stations 32 and 33, from the ingot overturning system 50.

From the above description, the operation of the system is apparent to those skilled in the art, and in particular it is as follows.

The system receives all the data relating to the production batch, and then it receives the pallets with the ingots in the first bay 12 and in the second bay 13.

The anthropomorphic arms 17 and 18 pick up the first ingot and one of the two arms, for example the arm 17, places the ingot on the scale of the weighing system 25 to recognize it and weigh it. Therefore, if the upper face is the correct one, the arm 17 picks up the ingot and takes it to the free operating station, for example station 32.

Otherwise, if the upper face is not the correct one, the arm 17 brings the ingot to station 51 of the ingot overturning system 50, and the pneumatic or mechanical gripper 52, by rotating, turns the ingot. The arm 17 now picks up the ingot with the correct face.

The ingot is placed in the lower base 35, a depression is activated to keep the ingot in place.

The station 32 closes by bringing the lower base 35 closer to the upper portion 36, the suction unit 43 is activated and the removal processing is carried out with the laser 30.

The presence of the suction unit and the sealed chamber, in which the processing is carried out, allows recovering the removed precious metal.

From the weight measured with the scale, the excess weight to reach the desired weight is obtained and the number of laser pulses required to eliminate such a weight is calculated.

Each pulse of the laser scratches a controlled amount of precious metal from the ingot.

Based on how many pulses the laser must supply and based on the pattern or serial number or any other symbol which must be imprinted on the ingot, the system determines how it must draw on the ingot by using the pulses and thus the pixels available.

Once the removal is completed, the station 32 opens, the arm 17 picks up the ingot from the lower base 35 and places it again on the scale of the weighing system 25 to control the weight.

Therefore, if the operation is successful, it places the ingot back on the pallet.

The system thus devised is susceptible to several modifications and variations, all falling within the scope of the inventive concept; moreover, all details are replaceable by technically equivalent elements.

## Claims

1. A system for automatic bringing precious metal ingots to a nominal weight comprising: at least one positioning station (12, 13) for a plurality of ingots; at least one robotic system (17, 18) for handling said ingots; a weighing system (25) for said ingots; a laser (30) for processing said ingots inside at least one pressurized sealed chamber (35, 36); a suction system (40) connected to said at least one pressurized sealed chamber (35, 36).

2. A system according to claim 1, **characterized in that** it comprises at least a first video camera (20, 21) for said at least one positioning station (12, 13).

3. A system according to claim 1, **characterized in that** it comprises a third video camera (26) for said weighing system (25).

4. A system according to claim 1, **characterized in that** it comprises at least a fourth video camera (38, 39) for said at least one pressurized sealed chamber (35, 36).

5. A system according to claim 1, **characterized in that** it comprises a system (50) for overturning said ingot.

6. A system according to claim 5, **characterized in that** said ingot overturning system (50) comprises a station (51) and a pneumatic or mechanical gripper (52) placed on a pivoting arm (53).

7. A system according to claim 1, **characterized in that** said weighing system (25) for said ingots comprises a certified and self-calibrating scale.

8. A system according to claim 1, **characterized in that** said laser (30) is an Ytterbium fiber Nd-Yag laser, with an equivalent output power of 400W and a wavelength of 1064 nm.

9. A system according to claim 1, **characterized in that** said suction system (43) comprises an absolute filter of the HEPA type with a 0.3 micron filtration.

10. A method for automatic bringing precious metal ingots to a nominal weight comprising the steps of: positioning a plurality of ingots in at least one positioning station (12, 13); weighing an ingot; removing part of said ingot by means of a laser in at least one pressurized sealed chamber (35, 36); performing suction in said at least one pressurized sealed chamber (35, 36).
